# EUROPÄISCHE PATENTSCHRIFT

(11) **EP 0 925 375 B1**
(45) Veröffentlichungstag und Bekanntmachung des Hinweises auf die Patenterteilung: **04.10.2001**
(21) Anmeldenummer: 97903144.0
(22) Anmeldetag: 03.03.1997
(51) Int. Cl.: C21B 13/14

(54) **VERFAHREN ZUM HERSTELLEN VON METALLSCHWAMM**
PROCESS FOR THE PRODUCTION OF SPONGY METAL
PROCEDE DE PRODUCTION DE METAL SPONGIEUX

(30) Priorität: 05.03.1996 AT 41496
(43) Veröffentlichungstag der Anmeldung: 30.06.1999
(73) Patentinhaber: VOEST-ALPINE INDUSTRIEANLAGENBAU GMBH, 4020 Linz (AT)
(72) Erfinder: WURM, Johannes, A-4154 Nebelberg (AT)
(74) Vertreter: Kopecky, Helmut, Dipl.-Ing.
(86) Internationale Anmeldenummer: AT9700044
(87) Internationale Veröffentlichungsnummer: WO9733005

(56) Entgegenhaltungen:
- AT-B- 396 255
- FR-A- 2 139 958
- US-A- 2 653 088
- PATENT ABSTRACTS OF JAPAN vol. 013, no. 379 (C-628), 22.August 1989 & JP 01 129914 A (KAWASAKI HEAVY IND LTD), 23.Mai 1989,
- PATENT ABSTRACTS OF JAPAN vol. 012, no. 128 (C-489), 20.April 1988 & JP 62 247018 A (ISHIKAWAJIMA HARIMA HEAVY IND CO LTD), 28.Oktober 1987,

## Beschreibung

Die Erfindung betrifft ein Verfahren zum Herstellen von Metallschwamm, insbesondere Eisenschwamm, aus von Metallerz bzw. Eisenerz, vorzugsweise in Stück- und/oder Pelletform, und gegebenenfalls Zuschlägen gebildeten Einsatzstoffen, wobei ein aus mindestens zwei voneinder unabhangigen und parallelgeschalteten Gasquellen stammende, je CO und H₂ enthaltendes Einsatzgas, das verdichtet und gegebenenfalls einer CO₂-Eliminierung und Aufheizung unterworfen wird, als Reduktionsgas einer Reduktionszone zugeführt und nach Umsetzung mit dem Metallerz als Exportgas zur weiteren Verwendung für einen Verbraucher aus der Reduktionszone abgezogen wird, sowie eine Anlage zur Durchführung des Verfahrens. Ein Verfahren und eine Anlage mit zwei solchen Gasquellen deren Reduktionsgas einer Reduktionszone zugehührt wird, ist beschrieben in JP-A- 01 129 914 und -62 247 018. Bei aus der AT-B - 396.255 und der DE-C - 40 37 977 bekannten Verfahren wird eine Gasquelle von einer ersten Reduktionszone gebildet, in der Eisenerz zu Eisenschwamm direkt reduziert wird, wobei der Eisenschwamm in einer Einschmelzvergasungszone unter Zufuhr von Kohlenstoffträgern und sauerstoffhältigem Gas erschmolzen und ein CO- und H₂-hältiges Reduktionsgas erzeugt wird, welches in die erste Reduktionszone eingeleitet, dort umgesetzt und als Einsatzgas für eine weitere Reduktionszone abgezogen wird. Gemäß der AT-B - 396.255 wird das Einsatzgas vor Einleitung in die weitere Reduktionszone einer CO₂-Eliminierung mittels eines Reformers und dabei einer Aufheizung unterzogen; gemäß der DE-C - 40 37 977 ist die CO₂-Eliminierung durch einen CO₂-Wäscher verwirklicht.

Bei diesen bekannten Verfahren wird aus der weiteren Reduktionszone abgezogenes Exportgas einer Wäsche unterworfen, anschließend mit dem aus der ersten Reduktionszone stammenden Exportgas gemischt und das so gebildete Mischgas der CO₂-Eliminierung und Aufheizung unterzogen. Dieses Mischgas wird dann dem weiteren Reduktionsprozeß als Reduktionsgas zugeführt. Hierdurch gelingt eine Ausnützung eines Teiles der im aus der weiteren Reduktionszone stammenden Exportgas noch vorhandenen Reduktanten, da dieses Exportgas als Recycle-Reduktionsgas dem weiteren Reduktionsprozeß zugeführt wird.

Oftmals besteht die Anforderung, daß das Exportgas aus der weiteren Reduktionszone für einen externen Verbraucher, z.B. als Brenngas, zur Verfügung stehen soll. In diesem Fall wird das Exportgas der weiteren Reduktionszone nicht rezirkuliert. Es ist daher in diesem Fall Vorsorge zu treffen, daß stets für einen stabilen Betrieb der Reduktion ausreichend Reduktionsgas zur Verfügung steht. Die Versorgung der weiteren Reduktionszone mit genügend Reduktionsgas soll insbesondere auch für unterschiedliche Betriebszustände der Gesamtanlage, z.B. auch im Falle einer Störung, gesichert sein.

Diese Aufgabe wird bei einem Verfahren der eingangs beschriebenen Art dadurch gelöst, daß ein Ausfall einer der Gasquellen dadurch kompensiert wird, daß zumindest ein Teil des aus der Reduktionszone stammenden Exportgases rezirkuliert wird, wobei dieses Exportgas einer Verdichtung, einer CO₂-Eliminierung und gegebenenfalls einer Aufheizung unterzogen und gemeinsam mit dem aus der (den) anderen intakten Gasquelle(n) stammenden Einsatzgas der Reduktionszone zugeführt wird.

Die Besonderheit des Verfahrens ist darin zu sehen, daß beim Vorsehen von mindestens zwei zwei voneinander unabhängigen und parallelgeschalteten Gasquellen der Direktreduktionsprozeß in der weiteren Reduktionszone auch bei Ausfall einer der Gasquellen fortgesetzt werden kann. Ein Ausfall einer der Gasquellen würde nämlich normalerweise bedeuten, daß der weiteren Reduktionszone zu wenig Reduktionsgas zugeführt wird, was zu Schwierigkeiten führt und unter Umständen den Abbruch des kontinuierlich ablaufenden Direktreduktionsprozesses in dieser weiteren Reduktionszone verursachen kann. Erfindungsgemäß wird dies durch das Rezirkulieren zumindest eines Teiles des aus der weiteren Reduktionszone stammenden Exportgases vermieden.

Vorzugsweise wird das aus der weiteren Reduktionszone stammende rezirkulierte Exportgas zum Ausgleich von Druckunterschieden zunächst vorverdichtet und im vorverdichteten Zustand dem aus der intakten Gasquelle stammenden Reduktionsgas zugemischt und gemeinsam mit diesem einer weiteren Verdichtung unterzogen. In diesem Fall erfolgt die Verdichtung des rezirkulierten Exportgases stufenweise auf das für den weiteren Direktreduktionsprozeß erforderliche Druckniveau, wodurch mit nicht allzu aufwendigen Verdichtern (von der Leistung her gesehen) das Auslangen gefunden werden kann.

Als Gasquellen kommen neben einer Anlage mit einer ersten Reduktionszone, in der Eisenerz zu Eisenschwamm direkt reduziert wird und der Eisenschwamm in einer Einschmelzvergasungszone unter Zufuhr von Kohlenstoffträgern und sauerstoffhältigem Gas erschmolzen wird, noch Kohlevergasungsverfahren und Hochofenprozesse in Frage, so daß zumindest eine Gasquelle auch von einer Kohlevergasung oder von einem Hochofen gebildet werden könnte.

Eine Anlage zur Durchführung des erfindungsgemäßen Verfahrens mit einem Reduktionsreaktor zum Herstellen von Metallschwamm, insbesondere Eisenschwamm, aus von Metallerz bzw. Eisenerz, vorzugsweise in Stück- und/oder Pelletform, und gegebenenfalls Zuschlägen gebildeten Einsatzstoffen, mit einer Reduktionsgas-Zuleitung und einer Erz-Zuleitung zu diesem Reduktionsreaktor, einer Exportgas-Ableitung aus diesem Reduktionsreaktor und einer Austragvorrichtung für das in diesem Reduktionsreaktor gebildete Reduktionsprodukt, wobei von mindestens zwei voneinander unabhängigen und parallelgeschalteten Gasquellen, die je ein CO und H₂ enthaltendes Einsatzgas spenden eine Einsatzgas-Leitung über einen Verdichter und gegebenenfalls eine CO₂-Eliminierungsaniage und gegebenenfalls einen Gaserhitzer in die Reduktionsgas-Zuleitung mündet, ist dadurch gekennzeichnet, daß eine Förderleitung für zumindest einen Teil des im Reduktionsreaktor gebildeten Exportgases leitungsmäßig über die Verdichter, die über eine Verbindungsleitung in Serie schaltbar sind, und die CO₂-Eliminierungsanlage und gegebenenfalls die Heizeinrichtung mit der Reduktionsgas-Zuleitung des Reduktionsreaktors verbindbar ist.

Dadurch, daß die für die beiden Gasquellen ohnehin vorgesehenen Verdichter wahlweise von einer Parallelschaltung in Serie schaltbar sind, ist im Falle des Rezirkulierens des Exportgases für das rezirkulierte Gas kein eigener Verdichter notwendig, so daß sich enorme Investitionseinsparungen ergeben.

Hierbei sind zweckmäßig die beiden von den Gasquellen ausgehenden Einsatzgas-Leitungen vor dem Einmünden in jeweils einen Verdichter jeweils für sich mittels Ventile absperrbar und über eine Verbindungsleitung verbindbar.

Eine bevorzugte Ausführungsform ist dadurch gekennzeichnet, daß mindestens eine Gasquelle von einem ersten Reduktionsreaktor für Eisenerz, vorzugsweise in Stück- und/oder Pelletform, einem Einschmelzvergaser, einer den Einschmelzvergaser mit dem ersten Reduktionsreaktor verbindenden Zuleitung für ein Reduktionsgas, einer den ersten Reduktionsreaktor mit dem Einschmelzvergaser verbindenden Förderleitung für das im ersten Reduktionsreaktor gebildete Reduktionsprodukt, einer vom ersten Reduktionsreaktor ausgehenden Exportgas-Ableitung, in den Einschmelzvergaser mündenden Zuleitungen für sauerstoffhältige Gase und Kohlenstoffträger und einem am Einschmelzvergaser vorgesehenen Abstich für Roheisen und Schlacke gebildet ist, wobei die vom ersten Reduktionsreaktor ausgehende Exportgas-Ableitung als Einsatzgas-Leitung dient.

Vorzugsweise sind zwei Gasquellen in gleicher Weise von ersten Reduktionsreaktoren mit je einem Einschmelzvergaser gebildet und über je einen Verdichter mittels Einsatzgas-Leitungen mit der Reduktionsgas-Zuleitung des weiteren Reduktionsreaktors leitungsmäßig verbunden.

Die Erfindung ist nachfolgend anhand eines in der Zeichnung dargestellten Ausführungsbeispieles näher erläutert, wobei Fig. 1 eine erfindungsgemäße Anlage im Blockdiagramm veranschaulicht. Die Fig. 2 und 3 verdeutlichen die Gaswege jeweils bei einem Ausfall einer der Gasquellen. Fig. 4 veranschaulicht eine mögliche Ausführungsform einer Gasquelle.

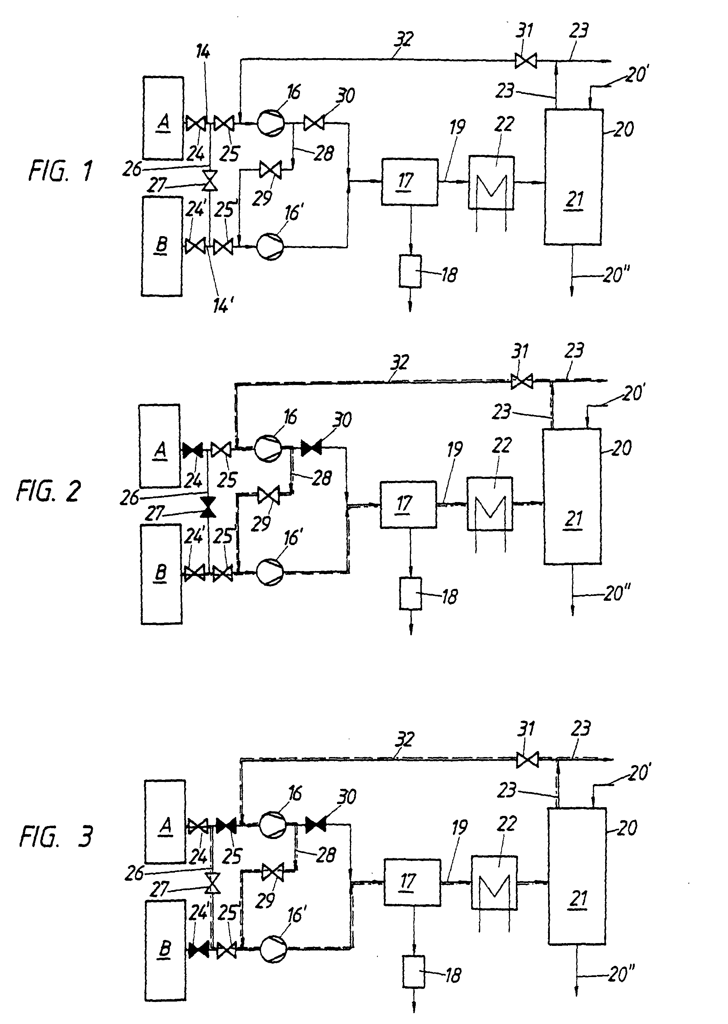

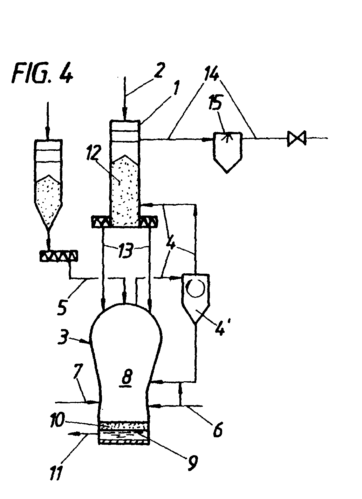

Die beiden in Fig. 1 dargestellten, ein Einsatzgas liefernden Gasquellen A und B sind vorzugsweise jeweils wie folgt und in Fig. 4 gezeigt ausgebildet:

In einen einen ersten Reduktionsreaktor 1 bildenden Schachtofen wird von oben über eine Fördereinrichtung 2 stückiges Eisenerz und/oder Eisenerz in Pelletform über ein nicht dargestelltes Schleusensystem, gegebenenfalls zusammen mit Zuschlagstoffen unter Bildung eines bewegten Bettes, chargiert. Der Schachtofen 1 steht mit einem Einschmelzvergaser 3 in Verbindung, in dem aus Kohle und sauerstoffhältigem Gas ein Reduktionsgas erzeugt wird, welches über eine Zuleitung 4 dem Schachtofen 1 zugeführt wird, wobei in der Zuleitung 4 gegebenenfalls eine Gasreinigungseinrichtung 4' für eine Trocken-Entstaubung vorgesehen ist.

Unter bewegtem Bett wird allgemein ein sich kontinuierlich bewegender Materialstrom verstanden, dessen sich bewegende Teilchen mit einem entgegenströmenden Reduktionsgas in Kontakt gelangen. Vorzugsweise kommt ein sich kontinuierlich infolge Schwerkraftwirkung nach unten bewegender Materialstrom zur Anwendung.

Als Reduktionsreaktor kann anstelle eines Schachtofens 1 auch ein Reaktor mit einer Venturi-Wirbelschicht, einer zirkulierenden Wirbelschicht, einem Fließbett oder ein Reaktor mit Wanderrost bzw. ein Drehrohrofen vorgesehen sein.

Der Einschmelzvergaser 3 weist eine Zuführung 5 für feste Kohlenstoffträger, eine Zuführung 6 für sauerstoffhältige Gase sowie gegebenenfalls Zuführungen 7 für bei Raumtemperatur flüssige oder gasförmige Kohlenstoffträger, wie Kohlenwasserstoffe, sowie für gebrannte Zuschläge auf. In dem Einschmelzvergaser 3 sammelt sich unterhalb der Einschmelzvergasungszone 8 schmelzflüssiges Roheisen 9 und schmelzflüssige Schlacke 10, die über einen Abstich 11 abgestochen werden.

Das im Schachtofen 1 in einer Direktreduktionszone 12 zu Eisenschwamm reduzierte Eisenerz wird zusammen mit den in der Direktreduktionszone 12 gebrannten Zuschlägen über eine den Schachtofen 1 mit dem Einschmelzvergaser 3 verbindende Förderleitung 13 zugeführt, beispielsweise mittels Austragsschnecken etc.. An dem oberen Teil des Schachtofens 1 schließt eine Leitung 14 für das in der Direktreduktionszone 12 aus Reduktionsgas entstehende Exportgas, das als Einsatzgas für einen weiteren Reduktionsprozeß dienen soll, an.

Von jeder der wie oben beschrieben gestalteten Gasquellen A und B wird das über die Einsatzgas-Leitung 14 (für Gasquelle A) und 14' (für Gasquelle B) abgezogene Exportgas zunächst einer Reinigung in einem Wäscher 15 unterzogen, um es möglichst vollständig von Staubpartikeln zu befreien und den Wasserdampfgehalt zu erniedrigen. Anschließend gelangt das Exportgas mit Hilfe eines Gasverdichters 16 (für Gasquelle A) und 16' (für Gasquelle B) in eine CO₂-Eliminierungsanlage 17 (z.B. in einen CO₂-Wäscher oder eine Druckwechsel-Adsorptionsanlage), in der es möglichst weitgehend von CO₂ befreit wird.

Wie aus Fig. 1 zu erkennen ist, sind die Gasquellen A und B zueinander parallel angeordnet, wobei deren Einsatzgas-Ableitungen 14, 14' nach den Verdichtern 16 und 16' zusammenmünden, so daß die beiden aus den Gasquellen A und B stammenden Einsatzgase gemischt der CO₂-Eliminierung zugeführt werden. Hierdurch ist nur eine einzige CO₂-Eliminierungsanlage 17 erforderlich, was insbesondere dann vorteilhaft ist, wenn die aus den Gasquellen A und B stammenden Einsatzgase eine ähnliche oder gleiche chemische Zusammensetzung aufweisen.

Das aus der CO₂-Entfernungsanlage 17 austretende Abgas wird gegebenenfalls einer Entschwefelungseinrichtung 18 zugeführt. Das so von CO₂ gereinigte Einsatzgas steht nunmehr für einen weiteren Reduktionsprozeß zur Verfügung. Es wird über eine Reduktionsgas-Zuleitung 19 einem zweiten, als Schachtofen 20 ausgebildeten Reduktionsreaktor, der wie der erste Schachtofen 1 ebenfalls eines bewegtes Bett aufweist und im Gegenstromprinzip arbeitet, zugeführt. In diesem zweiten Schachtofen 20 wird Metallerz, vorzugsweise Eisenerz in Stück- und/oder Pelletform in einer Reduktionszone 21 zu Eisenschwamm direktreduziert. Die Erzzuleitung ist mit 20' und die Eisenschwamm-Ausbringeinrichtung mit 20" bezeichnet.

Im zweiten Schachtofen 20 könnten auch Metallerze, wie Mangan-, Blei- und Zinkerz, einer Teil- oder Fertigreduktion unterzogen werden.

Da die gemischten Einsatzgase der Gasquellen A und B durch die CO₂-Eliminierung eine starke Abkühlung erfahren haben, wird das aus der CO₂-Eliminierungsanlage austretende Reduktionsgas vor Einleitung in den zweiten Reduktions-Schachtofen 20 einer Aufheizung in einem Gaserhitzer 22 unterzogen. Hierdurch erreicht das Reduktionsgas die für die Reduktion im zweiten Reduktions-Schachtofen 20 erforderliche Temperatur, die in einem Temperaturbereich zwischen 600 und 900°C liegt. Für H₂-reiche Reduktionsgase ist auch ein Temperaturbereich über 900°C in Betracht zu ziehen.

Das aus dem zweiten Reduktions-Schachtofen 20 über eine Exportgas-Leitung 23 abgezogene Exportgas wird je nach Verwendungszweck ebenfalls einer Reinigung und Kühlung in einem nicht näher dargestellten Exportgaswäscher unterzogen, um es von Staubpartikeln zu säubern und den Wasserdampfgehalt zu erniedrigen, worauf es einem Verbraucher zugeführt werden kann.

Die Einsatzgas-Leitungen sind jeweils mit ersten Ventilen 24, 24' und zweiten Ventilen 25, 25', die jeweils vor den Verdichtern 16 liegen, versehen. Zwischen den ersten und zweiten Ventilen 24, 25 bzw. 24', 25' ist eine die Einsatzgas-Leitungen 14 und 14' der beiden Gasquellen A und B verbindende Verbindungsleitung 26 vorgesehen, die mit einem Ventil 27 versehen ist.

Von der Einsatzgas-Leitung 14 der Gasquelle A zweigt nach dem Verdichter 16 eine weitere die Einsatzgas-Leitungen 14, 14' verbindende Verbindungsleitung 28 ab, die ebenfalls mit einem Ventil 29 versehen ist und vor dem Verdichter 16' der anderen Gasquelle B in die Einsatzgas-Leitung 14' dieser Gasquelle B, jedoch nach deren zweitem Ventil 25', einmündet. Die Exportgas-Leitung 14, von der diese weitere Verbindungsleitung 28 abzweigt, ist nach der Abzweigung mit einem zusätzlichen Ventil 30 versehen.

Von der Exportgas-Leitung 27 des weiteren Schachtofens 20 zweigt eine mit einem Ventil 31 versehene Förderleitung 32 ab und führt zu der Einsatzgas-Leitung 14 der Gasquelle A vor dem dieser zugeordneten Verdichter 16.

Die Funktion der Anlage ist nachfolgend beschrieben:

Wenn beide Gasquellen in etwa gleichem Maß (Menge, chemische Zusammensetzung) ein Einsatzgas für die weitere Reduktionsanlage, d.h. den weiteren Schachtofen 20, liefern, sind die Ventile der Einsatzgas-Leitungen 14 und 14' alle geöffnet und das Ventil 31 der Förderleitung 32 für die Rückführung eines im weiteren Schachtofen 20 gebildeten Exportgases sowie die Ventile 27 und 29 der Verbindungsleitungen 26 und 28 zwischen den Einsatzgas-Leitungen 14 und 14' geschlossen.

Fällt die Gasquelle A aus - dies ist in Fig. 2 dargestellt -, wird ein Teil des im weiteren Schachtofen 20 gebildeten Exportgases über die Förderleitung 32 nach Öffnen deren Ventiles 31 in die Einsatzgas-Leitung 14 eingeleitet. Hierbei weist das rückgeführte Exportgas beispielsweise einen Überdruck von etwa 0,3 bar auf. Das rückgeführte Exportgas wird über den Verdichter 16 und die nach dem Verdichter 16 von der Einsatzgas-Leitung 14 abzweigende Verbindungsleitung 28 dem Verdichter 16', der der anderen intakten Gasquelle B zugeordnet ist, zugeführt und mit dem aus der Gasquelle B stammenden Einsatzgas gemischt sowie mittels des dieser Gasquelle B zugeordneten Verdichters 16' verdichtet. Die erste Verdichtung erfolgt beispielsweise auf etwa 1,5 bar Überdruck und die zweite Verdichtung durch den Verdichter 16' dann auf den für den Schachtofen 20 erforderlichen Überdruck von beispielsweise etwa 3 bar. Hierbei sind die in Fig. 2 schwarz angelegten Ventile 24, 30, 27 geschlossen und die Ventile 31, 24', 25' und 29 geöffnet. Der Gasfluß ist in Fig. 2 (und auch in Fig. 3) mit strichlierten Linien veranschaulicht.

Kommt es zu einem Ausfall der Gasquelle B, was in Fig. 3 veranschaulicht ist, wird das rückgeführte und aus dem weiteren Schachtofen 20 stammende Exportgas ebenfalls über die weitere Verbindungsleitung 28 der Einsatzgas-Leitung 14' der Gasquelle B zugeführt und das aus der Gasquelle A stammende Einsatzgas über die erste Verbindungsleitung 26 ebenfalls in die Einsatzgas-Leitung 14' der Gasquelle B eingespeist. Hierbei sind die Ventile 25, 30, 24' geschlossen und die Ventile 31, 24, 27, 29 und 25' geöffnet.

Je nach Schachtleistung des Reduktionsreaktors 20 und Auslegung der Verdichter 16, 16' können bis zu 100 % des verfügbaren Exportgases rückgeführt werden, wobei jedoch auf den Inertgasanteil Rücksicht genommen werden muß.

Die Erfindung beschränkt sich nicht auf das in der Zeichnung dargestellte Ausführungsbeispiel, sondern umfaßt auch weitere Ausführungsformen. Wesentlich ist, daß die beiden Verdichter 16, 16' bei gleichzeitigem Einsatz der beiden Gasquellen A und B hinsichtlich der Gasführung parallelgeschaltet und bei Ausfall einer der beiden Gasquellen A und B in Serie geschaltet werden können. Dies gilt auch bei Einsatz von mehr als zwei Gasquellen für die jeweils einer der Gasquellen zugeordneten Verdichter.

## Patentansprüche

1. Verfahren zum Herstellen von Metallschwamm, insbesondere Eisenschwamm, aus von Metallerz bzw. Eisenerz, vorzugsweise in Stück- und/oder Pelletform, und gegebenenfalls Zuschlägen gebildeten Einsatzstoffen, wobei ein aus mindestens zwei voneinander unabhängigen und parallelgeschalteten Gasquellen (A, B) stammendes, je CO und H₂ enthaltendes Einsatzgas das verdichtet und gegebenenfalls einer CO₂-Eliminierung und Aufheizung unterworfen wird, als Reduktionsgas einer Reduktionszone (21) zugeführt und nach Umsetzung mit dem Metallerz als Exportgas zur weiteren Verwendung für einen Verbraucher aus der Reduktionszone (21) abgezogen wird und wobei ein Ausfall einer der Gasquellen (A, B) dadurch kompensiert wird, daß zumindest ein Teil des aus der Reduktionszone (21) stammenden Exportgases rezirkuliert wird, wobei dieses Exportgas einer Verdichtung, einer CO₂-Eliminierung und gegebenenfalls einer Aufheizung unterzogen und gemeinsam mit dem aus der (den) anderen intakten Gasquelle(n) (A bzw. B) stammenden Einsatzgas der Reduktionszone (21) zugeführt wird.

2. Verfahren nach Anspruch 1, **dadurch gekennzeichnet, daß** bei einem Ausfall einer der Gasquellen (A, B) das aus der Reduktionszone (21) stammende rezirkulierte Exportgas vorverdichtet und im vorverdichteten Zustand dem aus der intakten Gasquelle (A bzw. B) stammenden Reduktionsgas zugemischt und gemeinsam mit diesem einer weiteren Verdichtung unterzogen wird.

3. Verfahren nach Anspruch 1 oder 2, **dadurch gekennzeichnet, daß** mindestens eine der Gasquellen von einer ersten Reduktionszone (12) gebildet wird, in der Eisenerz zu Eisenschwamm direktreduziert wird, wobei der Eisenschwamm in einer EinschmelzVergasungszone (8) unter Zufuhr von Kohlenstoffträgern und sauerstoffhältigem Gas erschmolzen und ein CO- und H₂-hältiges Reduktionsgas erzeugt wird, welches in die erste Reduktionszone (12) eingeleitet, dort umgesetzt und als Einsatzgas für die weitere Reduktionszone (21) abgezogen wird, wobei das Einsatzgas vor Einleitung in die weitere Reduktionszone (21) einer Verdichtung, einer CO₂-Eliminierung sowie gegebenenfalls einer Aufheizung unterzogen wird.

4. Verfahren nach einem oder mehreren der Ansprüche 1 bis 3, **dadurch gekennzeichnet, daß** zumindest eine der Gasquellen (A, B) von einer Kohlevergasung gebildet wird.

5. Verfahren nach einem oder mehreren der Ansprüche 1 bis 4, **dadurch gekennzeichnet, daß** zumindest eine der Gasquellen (A, B) von einer einem Hochofen gebildet wird.

6. Anlage zur Durchführung des Verfahrens nach einem oder mehreren der Ansprüche 1 bis 5, mit einem Reduktionsreaktor (20) zum Herstellen von Metallschwamm, insbesondere Eisenschwamm, aus von Metallerz bzw. Eisenerz, vorzugsweise in Stück- und/oder Pelletform, und gegebenenfalls Zuschlägen gebildeten Einsatzstoffen, mit einer Reduktionsgas-Zuleitung (19) und einer Erz-Zuleitung (20') zu diesem Reduktionsreaktor (20), einer Exportgas-Ableitung (23) aus diesem Reduktionsreaktor (20) und einer Austragvorrichtung (20") für das in diesem Reduktionsreaktor (20) gebildete Reduktionsprodukt, wobei von mindestens zwei von einander unabhängigen und parallelgeschalteten, Gasquellen (A,B), die ein CO und H₂ enthaltendes Einsatzgas spenden, eine Einsatzgas-Leitung (14,14') über einen Verdichter (16,16') und gegebenenfalls eine CO₂-Eliminierungsanlage (17) und gegebenenfalls einen Gaserhitzer (22) in die Reduktionsgas-Zuleitung (19) mündet und wobei eine Förderleitung (32) für zumindest einen Teil des im Reduktionsreaktor (20) gebildeten Exportgases leitungsmäßig über die Verdichter (16, 16'), die über eine Verbindungsleitung (28) in Serie schaltbar sind, und die CO₂-Eliminierungsanlage (17) und gegebenenfalls die Heizeinrichtung (22) mit der Reduktionsgas-Zuleitung (19) des Reduktionsreaktors (20) verbindbar ist.

7. Anlage nach Anspruch 6, **dadurch gekennzeichnet, daß** die beiden von den Gasquellen (A, B) ausgehenden Einsatzgas-Leitungen (14, 14') vor dem Einmünden in jeweils einen Verdichter (16, 16') jeweils für sich mittels Ventile (24, 25, 24', 25') absperrbar und über eine Verbindungsleitung (26) verbindbar sind.

8. Anlage nach Anspruch 6 oder 7, **dadurch gekennzeichnet, daß** mindestens eine Gasquelle von einem ersten Reduktionsreaktor (1) für Eisenerz, vorzugsweise in Stück- und/oder Pelletform, einem Einschmelzvergaser (3), einer den Einschmelzvergaser (3) mit dem ersten Reduktionsreaktor (1) verbindenden Zuleitung (4) für ein Reduktionsgas, einer den ersten Reduktionsreaktor (1) mit dem Einschmelzvergaser (3) verbindenden Förderleitung (13) für das im ersten Reduktionsreaktor (1) gebildete Reduktionsprodukt, einer vom ersten Reduktionsreaktor (1) ausgehenden Exportgas-Ableitung (14), in den Einschmelzvergaser (3) mündenden Zuleitungen (6, 7) für sauerstoffhältige Gase und Kohlenstoffträger und einem am Einschmelzvergaser (3) vorgesehenen Abstich (11) für Roheisen (9) und Schlacke (10) gebildet ist, wobei die vom ersten Reduktionsreaktor (1) ausgehende Exportgas-Ableitung als Einsatzgas-Leitung (14, 14') dient.

9. Anlage nach Anspruch 8, **dadurch gekennzeichnet, daß** zwei Gasquellen (A, B) in gleicher Weise von ersten Reduktionsreaktoren (1) mit je einem Einschmelzvergaser (3) gebildet sind und über je einen Verdichter (16, 16') mittels Einsatzgas-Leitungen (14, 14') mit der Reduktionsgas-Zuleitung (19) des weiteren Reduktionsreaktors (20) leitungsmäßig verbunden sind.

## Claims

1. A method for producing sponge metal, in particular sponge iron, from charging materials formed of metal ore or iron ore, respectively, preferably in lumps and/or pellets, and optionally of fluxes, wherein a feed gas originating from at least two gas sources (A, B), which are independent from each other and connected in parallel, and containing CO and H₂, respectively, which is compressed and optionally subjected to CO₂ elimination and heating, is supplied to a reduction zone (21) to serve as a reducing gas and after reaction with the metal ore is withdrawn from the reduction zone (21) as an export gas for further use by a consumer, and wherein a breakdown of one of the gas sources (A, B) is compensated for by recycling at least a portion of the export gas from the reduction zone (21), wherein said export gas is subjected to compression, to CO₂ elimination and optionally to heating and is supplied to the reduction zone (21) along with the feedgas from the other intact gas source(s) (A or B, respectively).

2. A method according to claim 1, **characterized in that** in the event of a breakdown of one of the gas sources (A, B) the recycled export gas from the reduction zone (21) is pre-compressed and in the pre-compressed state is admixed to the reducing gas from the intact gas source (A or B, respectively) and is subjected to further compression along with the same.

3. A method according to claim 1 or 2, **characterized in that** at least one of the gas sources is formed by a first reduction zone (12) in which iron ore is directly reduced to sponge iron, wherein the sponge iron is melted in a meltdown gasifying zone (8) under supply of carbon carriers and oxygen-containing gas and a CO and H₂-containing reducing gas is produced, which is fed into the first reduction zone (12), is reacted there and is drawn off as a feedgas for the further reduction zone (21), wherein the feedgas prior to being fed into the further reduction zone (21) is subjected to compression, to CO₂ elimination and optionally to heating.

4. A method according to one or several of claims 1 to 3, **characterized in that** at least one of the gas sources (A, B) is formed by a coal gasification means.

5. A method according to one or several of claims 1 to 4, **characterized in that** at least one of the gas sources (A, B) is formed by a blast furnace.

6. A plant for carrying out the method according to one or several of claims 1 to 5, with a reduction reactor (20) for producing sponge metal, in particular sponge iron, from charging materials formed of metal ore or iron ore, respectively, preferably in lumps and/or pellets, and optionally of fluxes, with a reducing-gas feed duct (19) and an ore feed duct (20') leading to said reduction reactor (20), an export-gas discharge duct (23) departing from this reduction reactor (20) and a discharge means (20") for the reduction product formed in said reduction reactor (20), wherein from at least two gas sources (A, B) which are independent from each other and connected in parallel and which each dispense a feedgas containing CO and H₂ a feedgas duct (14, 14') runs into the reducing-gas feed duct (19) via a compressor (16, 16') and optionally a CO₂ elimination plant (17) and optionally a gas heater (22), and wherein a conveying duct (32) for at least a portion of the export gas formed in the reduction reactor (20) is flow-connectable with the reducing-gas feed duct (19) of the reduction reactor (20) via the compressors (16, 16'), which are connectable in series via a connection duct (28), and via the CO₂ elimination plant (17) and optionally the heating means (22).

7. A plant according to claim 6, **characterized in that** the two feedgas ducts (14, 14') departing from the gas sources (A, B) can be cut off individually by means of valves (24, 25, 24', 25') and are connectable via a connection duct (26) prior to running into one of the compressors (16, 16'), respectively.

8. A plant according to claim 6 or 7, **characterized in that** at least one gas source is formed by a first reduction reactor (1) for iron ore, preferably in lumps and/or pellets, a melter gasifier (3), a feed duct (4) for a reducing gas, connecting the melter gasifier (3) with the first reduction reactor (1), a conveying duct (13) for the reduction product formed in the first reduction reactor (1), connecting the first reduction reactor (1) with the melter gasifier (3), an export-gas discharge duct (14) departing from the first reduction reactor (1), feed ducts (6, 7) for oxygen-containing gases and carbon carriers, opening into the melter gasifier (3), and a tap (11) for pig iron (9) and slag (10), provided at the melter gasifier (3), wherein the export-gas discharge duct departing from the first reduction reactor (1) serves as a feedgas duct (14, 14').

9. A plant according to claim 8, **characterized in that** two gas sources (A, B) are formed in the same way by first reduction reactors (1) having one melter gasifier (3) each and through feedgas ducts (14, 14') are flow-connected with the reducing-gas feed duct (19) of the further reduction reactor (20) via one respective compressor (16, 16').

## Revendications

1. Procédé pour produire de l'éponge de métal, en particulier de l'éponge de fer, à partir de matières de départ formées par du minerai de métal ou du minerai de fer, de préférence sous forme de morceaux ou de boulettes, et le cas échéant par des additifs, dans lequel un gaz de départ contenant du CO et du H₂ et provenant d'au moins deux sources de gaz (A, B) indépendantes l'une de l'autre et branchées en parallèle, qui est comprimé et le cas échéant soumis à une élimination de CO₂ et à un réchauffement, est amené comme gaz de réduction à une zone de réduction (21) et, après transformation avec le minerai de métal, il est extrait hors de la zone de réduction (21) comme gaz exporté pour une autre utilisation destinée à un consommateur, et dans lequel une défaillance de l'une des sources de gaz (A, B) est compensée par le fait qu'au moins une partie du gaz exporté provenant de la zone de réduction (21) est mise en recirculation, ce gaz exporté étant soumis à une compression, à une élimination de CO₂ et le cas échéant à un réchauffement, et il est amené à la zone de réduction (21) conjointement avec le gaz de départ provenant de la ou des autres sources de gaz intactes (A ou B).

2. Procédé selon la revendication 1, **caractérisé en ce que** lors d'une défaillance de l'une des sources de gaz (A, B), le gaz exporté mis en recirculation provenant de la zone de réduction (21) est précomprimé et mélangé à l'état précomprimé avec le gaz de réduction provenant de la source de gaz intacte (A ou B), et soumis conjointement avec celui-ci à une autre compression.

3. Procédé selon l'une ou l'autre des revendications 1 et 2, **caractérisé en ce que** l'une au moins des sources de gaz est formée par une première zone de réduction (12) dans laquelle le minerai de fer est réduit directement en éponge de fer, l'éponge de fer étant fondue dans une zone de fusion par gazéification (8) avec alimentation de porteurs de carbone et du gaz contenant de l'oxygène, et l'on produit un gaz de réduction contenant du CO et du H₂ qui est introduit dans la première zone de réduction (12), qui y est transformé et qui est extrait en tant que gaz de départ pour l'autre zone de réductiôn (21), le gaz de départ étant soumis, avant d'être introduit dans l'autre zone de réduction (21), à une compression, à une élimination de CO₂ ainsi que le cas échéant à un réchauffement.

4. Procédé selon l'une ou plusieurs des revendications 1 à 3, **caractérisé en ce que** l'une au moins des sources de gaz (A, B) est formée par gazéification de charbon.

5. Procédé selon l'une ou plusieurs des revendications 1 à 4, **caractérisé en ce que** l'une au moins des sources de gaz (A, B) est formée par un haut fourneau.

6. Installation pour mettre en oeuvre le procédé selon l'une ou plusieurs des revendications 1 à 5, comportant un réacteur de réduction (20) pour produire de l'éponge de métal, en particulier de l'éponge de fer, à partir de matières de départ formées par le minerai de métal ou le minerai de fer, de préférence sous forme de morceaux et/ou de boulettes, et le cas échéant par des additifs, comportant une conduite d'alimentation en gaz de réduction (19) et une conduite d'alimentation en minerai (20') vers ce réacteur de réduction (20), une conduite d'évacuation de gaz exporté (23) hors de ce réacteur de réduction (20) et un dispositif de sortie (20") pour le produit de réduction formé dans ce réacteur de réduction (20), dans laquelle une conduite de gaz de départ (14, 14') part depuis au moins deux sources de gaz (A, B) indépendantes l'une de l'autre et branchées en parallèle qui fournissent un gaz de départ contenant du CO et du H₂, et ladite conduite débouche via un compresseur (16, 16') et le cas échéant via une installation d'élimination de CO₂ (17) et le cas échéant via un réchauffeur de gaz (22) jusque dans la conduite d'alimentation en gaz de réduction (19), et dans laquelle une conduite de convoyage (32) peut être reliée, pour une partie au moins du gaz exporté formé dans le réacteur de réduction (20), via les compresseurs (16, 16') susceptibles d'être branchés en série par l'intermédiaire d'une conduite de liaison (28), et via l'installation d'élimination de CO₂ (17) et le cas échéant via le dispositif de réchauffement (22) à la conduite d'alimentation en gaz de réduction (19) du réacteur de réduction (20).

7. Installation selon la revendication 6, **caractérisée en ce que** les deux conduites à gaz de départ (14, 14') partant des sources de gaz (A, B), avant de déboucher dans un compresseur respectif (16, 16'), peuvent être obturées chacune pour elle-même au moyen de valves (24, 25, 24', 25') et être reliées via une conduite de liaison (26).

8. Installation selon l'une ou l'autre des revendications 6 et 7, **caractérisée en ce qu'**au moins une source de gaz est formée par un premier réacteur de réduction (1) pour du minerai de fer, de préférence sous forme de morceaux et/ou de boulettes, par un gazéificateur de fusion (3), par une conduite d'amenée (4) pour un gaz de réduction reliant le gazéificateur de fusion (3) au premier réacteur de réduction (1), par une conduite de convoyage (13) pour le produit de réduction formé dans le premier réacteur de réduction (1) reliant le premier réacteur de réduction (1) au gazéificateur de fusion (3), par une conduite d'évacuation de gaz exporté (14) partant du premier réacteur de réduction (1), par des conduites d'amenée (6, 7) pour les gaz contenant de l'oxygène et les porteurs de carbone débouchant dans le gazéificateur de fusion (3), et par une piquée (11) prévue sur le gazéificateur de fusion (3) pour le fer brut (9) et pour le laitier (10), la conduite d'évacuation de gaz exporté partant du premier réacteur de réduction (1) servant de conduite à gaz de départ (14, 14').

9. Installation selon la revendication 8, **caractérisée en ce que** deux sources de gaz (A, B) sont formées de la même manière par des premiers réacteurs de réduction (1) comportant chacun un gazéificateur de fusion (3), et sont reliées chacune via un compresseur (16, 16') au moyen de conduites à gaz de départ (14, 14') à la conduite d'alimentation en gaz de réduction (19) de l'autre réacteur de réduction (20).
